# EUROPEAN PATENT SPECIFICATION

(11) **EP 2 722 915 B1**
(45) Date of publication and mention of the grant of the patent: **12.08.2015**
(21) Application number: 13460069.1
(22) Date of filing: 10.10.2013
(51) Int. Cl.: H01M 4/86, H01M 4/88, H01M 8/02, H01M 8/04, H01M 8/12, H01M 8/24

(54) **Battery of fuel cells**
Batterie von Brennstoffzellen
Batterie des piles à combustible

(30) Priority: 20.10.2012 PL 40130012
(43) Date of publication of application: 23.04.2014
(73) Proprietor: AKADEMIA GORNICZO-HUTNICZA im. Stanislawa Staszica, 30-059 Krakow (PL)
(72) Inventor: Magonski, Zbigniew, 31- 416 Kraków (PL); Dziurdzia, Barbara, 30-147 Kraków (PL)
(74) Representative: Magonska, Alina

(56) References cited:
- WO-A1-2010/071066
- WO-A1-2011/008116

## Description

The subject of the invention is the medium-power battery of fuel cells, which can be used as autonomous electricity generator or complementary power supply system for an individual household.

High-temperature fuel cells achieve high efficiency in the process of converting chemical energy into electricity. An advantage of the converters is quiet operation without mechanical vibration and favourable relationship of the unit weight and dimensions to the electric power generated. It is expected that electrochemical converters will become supplementary parts of electricity generators which draw energy from such renewable energy sources as: solar cells or wind turbines which are unable to provide continuous power output over a full 24-hour cycle.
A typical high-temperature fuel cell contains solid electrolyte, usually based on yttrium-stabilized zirconia. On the opposite sides of a thin electrolyte layer, the anode and cathode, electrodes transparent to gases are located. At high temperature, the zirconia ceramics has strong ionic conductivity. Due to the difference of partial oxygen pressure on both sides of the electrolyte it is polarised, as only oxygen ions, formed in the cathode layer due to molecular decomposition and drawing free electrons from the cathode, can move through the electrolyte layer. Thus, the cathode is positively polarised, whereas on the anode side, due to the reaction of oxygen ions with fuel - hydrogen or carbon oxide - free electrons are liberated which, in turn, leads to negative polarisation. Connecting an external electrical circuit to the electrodes will cause electric current flow that balances the internal ionic current.

From the Polish patent application no. P 388558 (WO 2011/008116), a fuel cell is known with a flat laminar ceramic substrate, the core of which is made of a central ceramic plate with high density and rigidity, which is permanently joined with porous cermet layers with distribution channels formed therein. The ceramic substrate so prepared has, on both sides on a part of the surface, layers of solid electrolyte applied and durably bonded to the substrate, which in turn, on a part of their surface, are covered with electrode layers, and such layers have their surfaces covered with contact layers. The description mentioned presents also an exemplary system of cell application in an electrochemical to electrical energy converter, in which the battery of fuel cells is covered with foamed ceramic thermal insulation.

From American patent descriptions US 4.276.355 and US 7.531.053 plate chemical to electrical energy converters are known, which contain multiple electrically connected fuel cells. The fuel cells are configured in a stack, whereby each ceramic structure of the cell is located between two plates. Each of the plates constitutes a separator between the following ceramic structures and has, on both sides, open longitudinal channels for the passage of fuel and air, whereby the fuel channels are arranged orthogonally in relation to the air flow channels. The separators referred to in the description US 7,531,053 are made of stainless steel with linear thermal expansion coefficient close to that of the electrolyte.

From American patent specification US 6,492,053 is known a fuel cell assembly comprising a stack of a plurality of planar fuel cells, where each fuel cell is placed between two interconnect plates, which are spaced apart by an insulated metal frame. Two interconnect plates and the insulated metal frame define a chamber for a fuel cell. Within the chamber, beside the fuel cell, also a compressible member is provided. The compressible member is provided with fuel gas passage means, and ensures a reliable electrical contact between the fuel cell and the interconnect plate. The metal components (interconnect plates, metal frame) and ceramic structure of fuel cell are bonded and sealed with a glass gaskets, which are solid at room temperature, but become viscous at operating temperature, above 700°C. This approach allows avoiding mechanical tensions caused by a mismatch in TCE between ceramics and metal components.

An advantage of the plate converters is relatively high value of electric power generated at small volume, which enables the use of an insulated chamber with compact dimensions, which translates into relatively low heat loss, since the amount of distributed heat is proportional to the chamber area. However, the compact design of batteries of cells prevents rapid heating and cooling of them.

The substance of the invention is a battery of fuel cells in which every two-sided cell is made in a form of a ceramic plate with individual connections for the supply and drainage of fluids and electric power output, and is equipped with a central anode current collector which, on both sides, has channels formed for distribution of fuel and operating channels. The central anode current collector is permanently bonded with a laminate consisting of an operating anode layer and solid electrolyte layer, where the central anode current collector is formed with the same anode material as the operating anode layer. Moreover, two sided cells DFC are connected with flexible separators and squeezed together with clamping bars. Furthermore, inside the thermally insulated chamber, heaters, heat absorbers and equipment forcing air circulation within the insulated chamber are located.
Advantageously, the central anode current collector contains inbuilt metallic conductive structures, where the metallic conductive structures can be favourably based on nickel.
The clamping bars ensure the pressure between the two-sided cells and the flexible separators. Additionally, the pressure connection of the two-sided cells with flexible separators is sealed with pads advantageously made from mica. The external surfaces of clamping bars are advantageously covered with ceramic insulating material.
The battery heaters are arranged in parallel to the two-sided cell stacks and are located perpendicularly to the direction of stream of gases circulating inside a thermally insulated chamber. Also, the heat absorbers are arranged in parallel to the two-sided cell stacks and are located perpendicularly to the direction of stream of gases circulating inside a thermally insulated chamber.
The battery is provided with a device, tangential fan, for forcing air circulation inside the thermally insulated chamber.
An alternative version of the battery is provided with a device for forcing air circulation inside the thermally insulated chamber, which is a linear distributor of oxidant streams, and the medium forcing the circulation are streams of fresh oxidant distributed with the distributor and shaped with nozzles.
Two-sided cells are electrically connected with metallic tape.

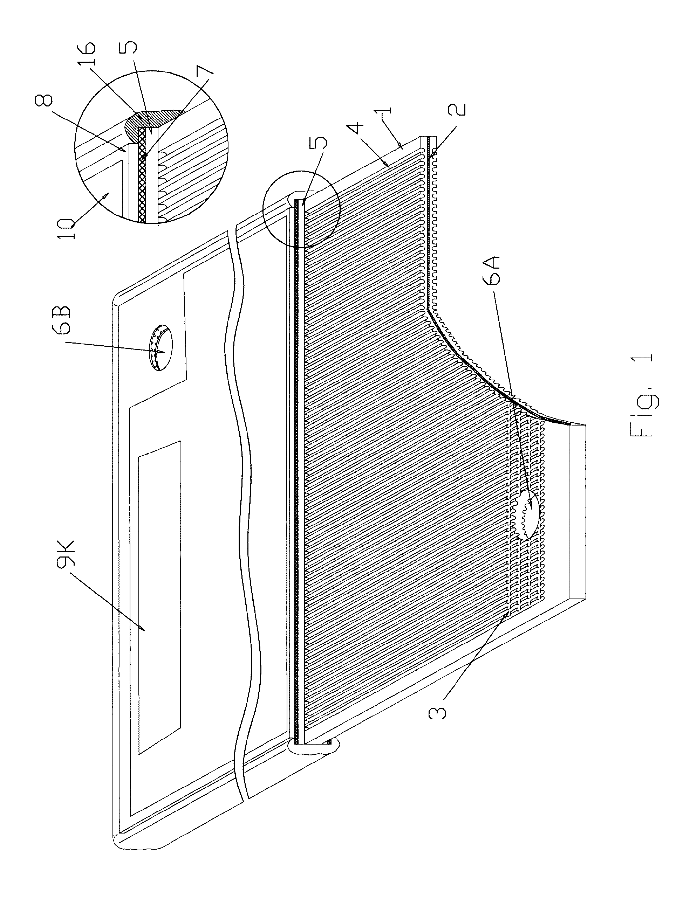

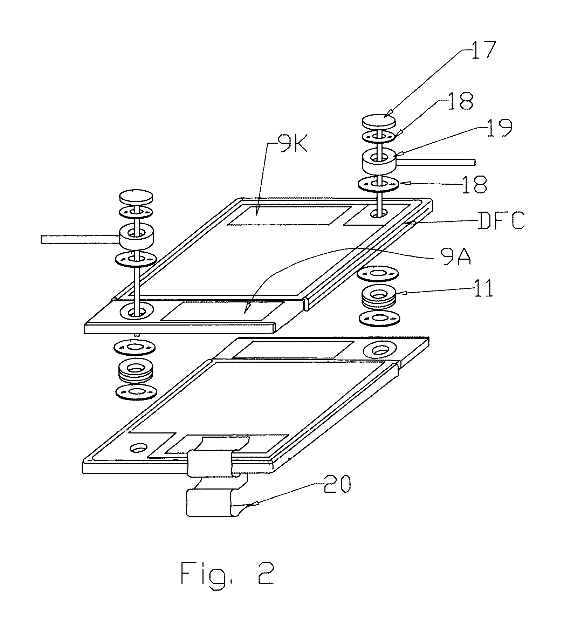

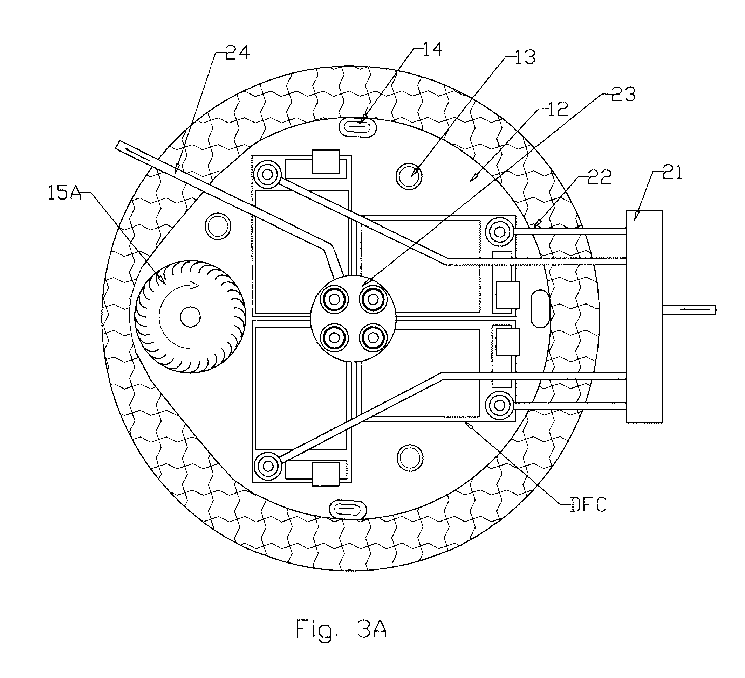

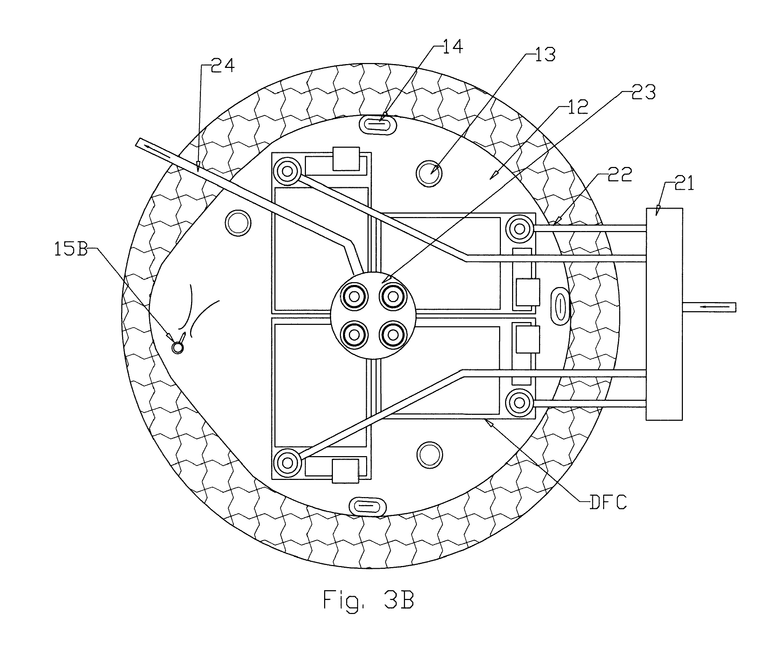

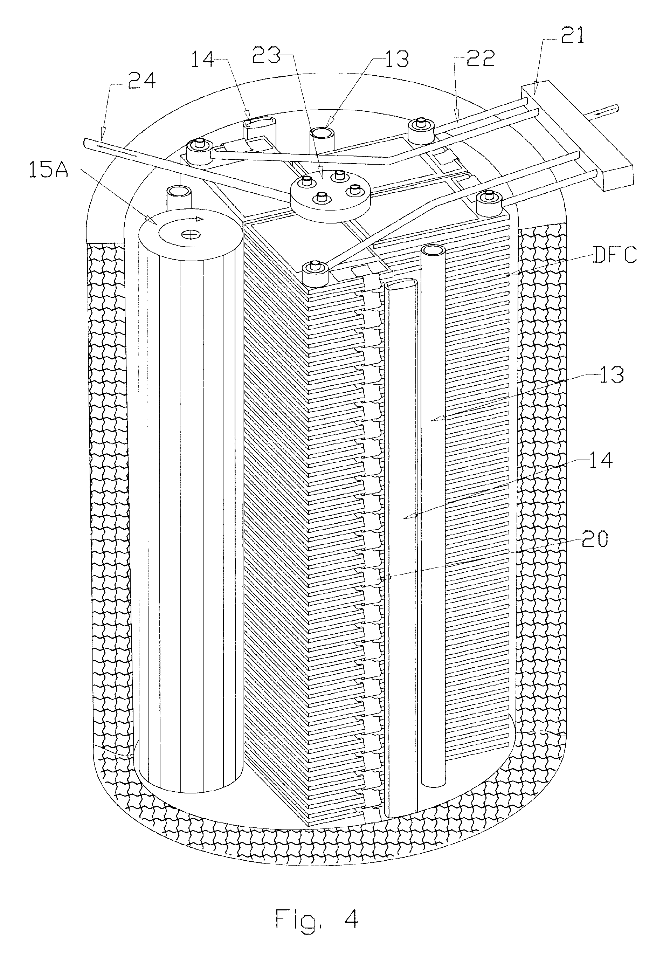

An example of the subject of the invention is shown in a drawing, in which Fig. 1 shows the design of the ceramic structure of the cells, Fig. 2 shows the connection manner of cells into a battery, Fig. 3A and Fig. 4 show examples of the electrochemical energy converter, whereas Fig. 3B shows an alternative design, in which linear distributor of oxidant streams serves as a stream pump forcing air circulation inside the thermally insulated chamber.

Flat two-sided DFC cell, constituting the main part of the battery, shown in Fig. 1, comprises the central anode current collector 1, equipped with central anode highly conductive core, advantageously containing embedded metallic nickel-based structures 2. In the central anode current collector 1, on both sides of it, distributing channels 3 and operating channels 4 are formed which supply fuel to the operating anode layer 5. The operating anode layers 5 are made of porous ceramic material containing zirconia ceramics and nickel. Such layers have ceramic structure close to the material constituting the central anode current collector 1 and are permanently bonded to it. On the surface of the operating anode layers 5, solid electrolyte layers 7 are spread, which are then covered with cathode layers 8, on which, in turn, cathode conductive layers 10 are applied, serving as the current collecting electrodes. The flat two-sided DFC cell constitutes a complete autonomous energy converter and is provided with individual input 6A and output 6B, respectively for fuel distribution and removing combustion products, and is further equipped with electrical contact fields 9A and 9K enabling connection of the electric load. The first contact field 9A has electrical connection, via central anode current collector 1, with the operating anode layers 5. The second contact field 9K has electrical connection, via conducting layer 10, with the cathode layer 8. The cathode conducting layer 10 constitutes a current collector for the cathode 8. It is intended primarily to minimise electric resistance between the cathode 8 and the contact field of the cathode 9K, and simultaneously, enabling free oxidant flow through that layer. The cathode conducting layer 10 can be advantageously made of porous silver, permeable to gases, or have mesh structure.

In normal operating conditions, the flat DFC two-sided cell is fully immersed in oxidant atmosphere. This requires tight protection against direct oxidant inflow to the anode layer, since it degrades the operating anode 5 and the central anode current collector 1. To this end, almost the entire outer surface of the central anode current collector 1 is covered with a laminate composed of the anode layer 5 and layer of solid electrolyte 7, and other areas of the outer surface, except for that under the anode contact field 9A, are covered with ceramic sealing compound 16.

Fig. 2 explains the manner of stacking the cells. To provide air flow to the cell cathodes, individual DFC two-sided cells are separated one from another with flexible separators 11. The flexible separators 11 are also intended to transfer fuel to the following adjacent two-sided DFC cells. The flexible separators 11 compensate also the inevitable lack of parallelism between the planes of the neighbouring two-sided DFC cells. The flexible separators are supported with sealing pads 18 intended to ensure gas tightness of connections. The two-sided DFC cells in each stack are electrically connected in series with metallic tape 20. All flexible separators 11 and sealing pads 18 are arranged concentrically and are compressed with clamping bars 17.

The particular design of the two-sided cell sets specific material requirements regarding the electrical conductivity for current collectors, since electric contact points of a single cell are located in the opposite corners of the ceramic structure. This results in lengthening the current path both on the anode and cathode sides. Since, at the anode side, the function of current collecting electrode is performed by the central anode current collector 1, its electrical conductivity is of high importance to the cell productivity. In order to improve electrical conductivity, conductive nickel layers are embedded. On the cathode side, the conductivity improvement has been achieved by using silver-based cathode conductive layers 10.

The design of the battery of fuel cells according to the invention, in which the main operating areas of the cells are separated and make physical contact, on most of its area, only with a stream of oxidant flowing around them, enables fast and safe battery heating with circulation of gases flowing around the battery. This has minimised mechanical stress due to non-uniform heating of the cells, since the neighbouring cells contact one another only with metallic separators having some flexibility. Furthermore, application of a device forcing oxidant circulation 15 A or 15B inside the thermally insulated chamber 12 allows improving heat exchange efficiency between heaters and the battery of fuel cells. That device is particularly useful in the battery heating phase, when it is necessary to ensure similar temperature of individual two-sided cells during the phase of rapid temperature rise. In the device of the invention, it is possible to use one of two renditions of gas circulator in the thermally insulated chamber 12. The first circulator version has been made based on a tangential fan 15A. Fig. 3A, Fig. 4. The other option, Fig. 3B, utilises Coanda effect, in which gas circulation in the thermally insulated chamber 12 is forced by a linear distributor of fresh oxidant streams 15 B.

In such circumstances, it is possible to reduce the battery activation time by multiple times in relation to the start up time of typical batteries, in which - due to interlocked structure - fast heating results in inevitable stress.
In the battery start up process, additional necessary heat is supplied by cylindrical heaters 13 arranged in parallel to the cell stack. A stream of gases rotating inside the thermally insulated chamber 12 supplies heat to the battery. After heating to about 700°C, the operating battery of fuel cells delivers enough heat to maintain optimum and safe working conditions. During normal operation, constant temperature is maintained at 800°C, and heat excess, after prior switching the heaters 13 off, is removed by heat absorbers 14 located inside the thermally insulated chamber 12, and can be used by other equipment, e.g. water heaters. Circulating stream of gases around the heat absorbers 14 allows efficient heat exchange and maintaining uniform temperature of individual cells of the battery.

The battery heaters 13 are arranged in parallel to the cell stack and are located perpendicularly to the direction of stream of gases circulating inside the thermally insulated chamber. The heaters 13 installed are in a form of extended metallic cylinders, through which streams of heated combustion gas are fed. In an alternative version, it is possible to use electric heaters. Heat absorbers 14 are arranged in parallel to the cell stack and are located perpendicularly to the of stream of gases circulating inside the chamber. Heat absorbers 14 are advantageously in the shape of reverse U-tubes, through which cooling medium is fed, and this medium transfer heat to heat exchangers connected with heat receivers.

The process of battery start up begins from feeding hydrogen to the two-sided DFC cell stack through the distributor 21, fuel lines 22 and connections 19. Then, through the distributing channels 3 and functional channels 4, hydrogen is transferred to the collector 23, from which it is discharged through the exhaust line 24. During the initial low-temperature heating phase, in the absence of catalytic combustion process, the discharged hydrogen is burnt in flames and, during normal operation of the battery, hydrogen residues in the exhaust gases are burnt in flames. Cell stacks are heated by three metallic cylindrical heaters 13, through the inner holes of which hot combustion gases from three independent gas burners are forced. At the same time, during the heating process, similar temperature is maintained for all two-sided DFC cells with the device forcing air circulation 15A or 15B. After heating the cell stacks to about 700°C, gas burners are shut down, and heat absorbers 14 are started with cooling medium flow forced through them. Flow intensity of the cooling medium is controlled so as to maintain constant temperature of 800°C in the thermally insulated chamber 12. Although, the battery of fuel cells allows higher current output to be achieved at higher operating temperatures (e.g. 900°C) - the compromise value of 800°C has been set to maintain a safety margin to prevent melting of silver-based components, i.e. metallic tape 20, porous cathode conductive layer 10 and contact fields of the anode 9A and 9B.
The main component of the battery is a two-sided cell. Its manufacturing process is described below.

### Example of option 1

1. Making the central anode current collector
   a. Lamination of 6 layers of anode membrane (ESL42421), T=80°C, P= 500 Atm.
   b. Making operating channels.
2. Lamination of operating anode layers (ESL 42421) and ZrO₂ electrolyte (ESL42400).
3. Assembly of laminates.
4. Drying, 370°C
5. Thermal processing of assembled laminates, 1550°C.
6. Printing of cathode layers, LSCF, (ESL4421).
7. Thermal processing of cathode layers, 1100°C.
8. Printing of contact and conductive layers.
9. Application of edge sealing composite, (ESL4916).
10. Thermal processing of contact layers and sealing composite, 900°C.
11. Making entry holes.
12. Reducing the operating anode and the central anode current collector in hydrogen atmosphere, 800°C.

1. Making the central anode current collector
   - Lamination of 4 layers of anode membrane (ESL42421) and three layers of nickel mesh, T=80°C, P= 500 Atm.
   - Drying and thermal processing; 370°C, 1600°C.
   - Lamination on both sides of anode membrane (ESL42421).
   - Drying and thermal processing; 370°C, 1,300°C.
   - Making operating channels.
2. Lamination of operating anode layers (ESL 42421) and ZrO₂ electrolyte (ESL42400).
3. Assembly of laminates.
4. Drying, 370°C.
5. Thermal processing of assembled laminates, 1600°C.
6. Printing of cathode layers, LSCF, (ESL4421).
7. Thermal processing of cathode layers, 1100°C.
8. Printing of contact and conductive layers.
9. Application of edge sealing composite, (ESL4916).
10. Thermal processing of contact layers and sealing composite, 900°C.
11. Making entry holes.
12. Reducing the operating anode and the central anode current collector in hydrogen atmosphere, 800°C.

### List of symbols:

- two-sided cell (DFC);
- central ceramic anode structure (1);
- embedded metallic conductive structure (2);
- distributing channels (3);
- operating channels (4);
- operating anode layer (5);
- input / output (6A) / (6B);
- solid electrolyte (7);
- cathode layer (8);
- anode contact field (9A);
- cathode contact field (9K);
- cathode conductive layer (10);
- flexible separator (11);
- thermally insulated chamber (12);
- heater (13);
- heat absorber (14);
- device forcing air circulation (15A) or (15B);
- tangential fan (15A);
- linear distributor of oxidant streams (15B);
- ceramic sealing composite (16);
- clamping bar (17);
- sealing pad (18);
- connection (19);
- metallic tape (20);
- distributor (21);
- fuel line (22);
- collector (23);
- exhaust line (24).

## Claims

1. Battery of fuel cells containing at least one stack of interconnected flat two-sided fuel cells arranged inside a thermally insulated chamber (12), where each two-sided fuel cell DFC is made in a form of a ceramic plate with individual connections for supply and drainage of fluids and discharge of electric energy, and where cathode layers (8) are disposed on the external surface of the ceramic plate, which are next covered with cathode conductive layers (10) **characterised in that**, each two sided fuel cell DFC has a central anode current collector (1), which is provided on both sides with fuel distributing channels (3) and operating channels (4) which on both sides is permanently bonded with a laminate consisting of an operating anode layer (5) and electrolyte layer (7), and where, the central anode current collector (1) is formed with the same anode
material as the operating anode layer (5), furthermore, two-sided cells DFC are connected together with flexible separators (11) and squeezed together with clamping bars 17, moreover, inside the thermally insulated chamber (12), heaters (13), heat absorbers (14) and device forcing air circulation (15A) or (15B) are located.

2. Battery of fuel cells according to claim 1, **characterised in that** the central anode current collector (1) contains embedded metallic conductive structures (2).

3. Battery of fuel cells according to claim 1, 2 **characterised in that** the metallic conductive structures (2) embedded into the central anode current collector (1) are made based on nickel.

4. Battery of fuel cells according to claim 1, **characterised in that** the pressure of the two-sided cells DFC against the flexible separators (11) is ensured by clamping bars (17) having outer surfaces advantageously coated with ceramic insulating material.

5. Battery of fuel cells according to claim 1, **characterised in that** the pressure connection of the two-sided cells DFC with the flexible separators (11) is sealed with sealing pads (18), advantageously made from mica.

6. Battery of fuel cells according to claim 1, **characterised in that** the heaters (13) are arranged in parallel to the two-sided cell stacks and are located perpendicularly to the direction of stream of gases circulating inside the thermally insulated chamber (12).

7. Battery of fuel cells according to claim 1, **characterised in that** the heat absorbers (14) are arranged in parallel to the two-sided cell stacks and are located perpendicularly to the direction of stream of gases circulating inside the thermally insulated chamber (12).

8. Battery of fuel cells according to claim 1, **characterised in that** the device forcing air circulation inside the thermally insulated chamber (12) is a tangential fan (15A).

9. Battery of fuel cells according to claim 1, **characterised in that** the device forcing air circulation inside the thermally insulated chamber (12) is the linear distributor of oxidant streams (15B), and the medium forcing the circulation are streams of fresh oxidant distributed with the distributor and shaped with nozzles.

10. Battery of fuel cells according to claim 1, **characterised in that** the two-sided cells DFC are electrically bonded with metallic tape (20).

## Patentansprüche

1. Brennstoffzellbatterie, enthaltend mindestens einen Speicher von miteinander verbundenen flachen beidseitigen Brennstoffzellen, in einer thermisch isolierten Kammer angeordnet (12), wobei jede zweiseitige DFC-Brennstoffzelle in Form einer Keramikplatte mit einzelnen Verbindungen für die Versorgung und Entwässerung von Flüssigkeiten und Entladung von elektrischer Energie angefertigt ist, und wobei die Kathodenschichtung (8) an der äußeren Oberfläche der Keramikplatte angeordnet ist, die nächste mit Kathodenleiterschicht bedeckt ist (10), **gekennzeichnet dadurch, dass** jede doppelseitige DFC-Brennstoffzelle über einen zentralen Anodenstromkollektor verfügt (1), der beidseitig mit Kraftstoffverteilungskanälen versesehen ist (3) sowie Arbeitskanälen (4), die auf beiden Seiten fest mit Laminat verbunden sind, das aus einer Betriebsanodenschicht besteht (5) sowie einer Elektrolytschicht (7), wobei der zentrale Anodenstromkollektor (1) mit dem gleichen Material wie die Schicht der Betriebsanoden gebildet ist (5), außerdem die beidseitigen DFC-Zellen zusammen mit flexiblen Seperatoren verbunden sind (11) und mit den Spannleisten 17 zusammen gepresst sind, im Inneren der thermisch isolierten Kammer (12), der Heizvorrichtungen (13), der Wärmeabsorber (14) und der Vorrichtung zur Luftzirkulation wie (15A) oder (15B) angeordnet sind.

2. Brennstoffzellbatterie nach Anspruch1, **dadurch gekennzeichnet, dass** der zentrale Anodenstromkollektor (1) eingebettete metallisch leitende Strukturen enthält (2).

3. Brennstoffzellbatterie nach Anspruch1, 2 **dadurch gekennzeichnet, dass** die metallischen Leiterstrukturen (2) in den zentralen Anodenstromabnehmer (1) auf Nickelbasis eingebettet ist.

4. Brennstoffzellbatterie nach Anspruch1, **dadurch gekennzeichnet, dass** der Druck der beidseitigen DFC-Zellen gegen die flexiblen Separatoren (11) gesichert ist durch Klemmleisten (17) mit Außenflächen, die vorteilhafterweise mit keramischem isolierendem Material beschichtet sind.

5. Brennstoffzellbatterie nach Anspruch1, **dadurch gekennzeichnet, dass** der Druckanschluss der beiden einseitigen DFC-Zellen mit den flexiblen Separatoren (11) mit Dichtflächen (18), vorteilhafterweise aus Glimmer, abgedichtet ist.

6. Brennstoffzellbatterie nach Anspruch1, **dadurch gekennzeichnet, dass** die Heizelemente (13) parallel zu den beidseitigen Zellenstapein angeordnet sind und sich senkrecht zu der Richtung des Stroms des in der thermisch isolierten Kammer zirkulierenden Gases (12) befinden.

7. Brennstoffzellbatterie nach Anspruch1, **dadurch gekennzeichnet, dass** die Wärmeabsorptionsmittel (14) parallel zu den beidseitigen Zellenstapeln angeordnet sind und und sich senkrecht zu der Richtung des Stroms des in der thermisch isolierten Kammer zirkulierenden Gases (12) befinden.

8. Brennstoffzellbatterie nach Anspruch1, **dadurch gekennzeichnet, dass** die Vorrichtung zur Luftzirkulation im Inneren der thermisch isolierten Kammer (12) ein Querstromgebläse (15A) ist.

9. Brennstoffzellbatterie nach Anspruch1, **dadurch gekennzeichnet, dass** die Vorrichtung zur Luftzirkulation im Inneren der thermisch isolierten Kammer (12) der lineare Verteiler der Oxidationsmittelströme (15B) ist, und das Medium zum Zirkulationsantrieb Ströme frischen Oxidationsmittels sind, verteilt über Distributoren und und geformt mit Düsen.

10. Brennstoffzellbatterie nach Anspruch1, **dadurch gekennzeichnet, dass** die zweiseitigen DFC-Zellen elektrisch mit Metallband (20) gebunden sind.

## Revendications

1. Batterie de piles à combustible contenant au moins un empilement de piles à combustible plates à deux faces planes reliées entre elles, disposées dans une enceinte d'isolation thermique (12), où chacune des piles à combustible DFC à deux faces est fabriquée sous la forme d'une plaque de céramique avec des connexions séparées pour l'alimentation et l'évacuation des fluides et le déchargement de l'énergie électrique, et où les couches cathodiques (8) sont placées sur la surface externe de la plaque céramique, qui sont ensuite recouvertes avec des couches conductrices cathodiques (10) **caractérisées en ce que** chacune des piles à combustible DFC à deux faces possède un collecteur de courant d'anode central (1), qui est équipé sur les deux côtés de canaux de distribution de carburant (3) et de canaux de fonctionnement (4), qui, sur les deux faces, est lié de façon permanente avec un stratifié constitué d'une couche d'anode de fonctionnement (5) et d'une couche d'électrolyte (7), et où le collecteur de courant d'anode centrale (1) est formé du même matériau d'anode que la couche d'anode de fonctionnement (5), en outre, les piles DFC à deux faces sont reliées entre elles avec des séparateurs flexibles (11) et serrées avec des barres de serrage 17, par ailleurs, à l'intérieur de la chambre isolée thermiquement (12), sont situés les dispositifs de chauffage (13), les absorbeurs de chaleur (14) et le dispositif forçant la circulation d'air (15A) ou (15B).

2. Batterie de piles à combustible selon la revendication 1, **caractérisée en ce que** le collecteur de courant d'anode centrale (1) contient des structures conductrices métalliques enchâssées (2).

3. Batterie de piles à combustible selon la revendication 1, 2 **caractérisée en ce que** les structures conductrices métalliques (2) enchâssées dans le collecteur de courant d'anode centrale (1) sont fabriquées à base de nickel.

4. Batterie de piles à combustible selon la revendication 1, **caractérisée en ce que** la pression des piles DFC à deux faces contre les séparateurs flexibles (11) est assurée par des barres de serrage (17) ayant des surfaces extérieures avantageusement revêtues d'un matériau isolant céramique.

5. Batterie de piles à combustible selon la revendication 1, **caractérisée en ce que** le raccord de pression des piles DFC à deux faces avec les séparateurs flexibles (11) est scellé avec des coussinets d'étanchéité (18), avantageusement fabriqués à partir de mica.

6. Batterie de piles à combustible selon la revendication 1, **caractérisée en ce que** les dispositifs de chauffage (13) sont disposés parallèlement aux empilements de piles à deux faces et sont situés perpendiculairement à la direction du courant de gaz circulant à l'intérieur de la chambre thermiquement isolée (12).

7. Batterie de piles à combustible selon la revendication 1, **caractérisée en ce que** les absorbeurs de chaleur (14) sont disposés parallèlement aux empilements de piles à deux faces et sont situés perpendiculairement à la direction du courant de gaz circulant à l'intérieur de la chambre thermiquement isolée (12).

8. Batterie de piles à combustible selon la revendication 1, **caractérisée en ce que** le dispositif forçant la circulation d'air à l'intérieur de la chambre isolée thermiquement (12) est un ventilateur tangentiel (15A).

9. Batterie de piles à combustible selon la revendication 1, **caractérisée en ce que** le dispositif forçant la circulation d'air à l'intérieur de la chambre isolée thermiquement (12) est un distributeur linéaire de flux d'oxydant (15B), et le médium forçant la circulation est constitué des flux d'oxydant frais distribués avec un distributeur et façonnés par des buses.

10. Batterie de piles à combustible selon la revendication 1, **caractérisée en ce que** les piles PLC à deux faces sont connectées électriquement avec du ruban métallique (20).
